# EUROPÄISCHE PATENTSCHRIFT

(11) **EP 0 663 306 B1**
(45) Veröffentlichungstag und Bekanntmachung des Hinweises auf die Patenterteilung: **23.09.1998**
(21) Anmeldenummer: 95100300.3
(22) Anmeldetag: 11.01.1995
(51) Int. Cl.: B60C 19/00, B60C 5/00

(54) **Kraftfahrzeugrad**
Motor vehicle wheel
Roue de véhicule à moteur

(30) Priorität: 14.01.1994 DE 4400912
(43) Veröffentlichungstag der Anmeldung: 19.07.1995
(73) Patentinhaber: Continental Aktiengesellschaft, 30165 Hannover (DE)
(72) Erfinder: Dodt, Thomas, Dr., D-30455 Hannover (DE); Gauterin, Frank, D-31535 Neustadt (DE)
(74) Vertreter: Schneider, Egon

(56) Entgegenhaltungen:
- EP-A- 0 029 120
- EP-A- 0 038 920
- EP-A- 0 269 242
- DE-B- 1 008 598
- FR-A- 2 390 301
- PATENT ABSTRACTS OF JAPAN vol. 012 no. 073 (M-674) ,8.März 1988 & JP-A-62 216803 (BRIDGESTONE CORP) 24.September 1987,
- PATENT ABSTRACTS OF JAPAN vol. 016 no. 311 (M-1277) ,8.Juli 1992 & JP-A-04 087803 (MAZDA MOTOR CORP) 19.März 1992,

## Beschreibung

Die vorliegende Erfindung betrifft ein Kraftfahrzeugrad mit einem auf einer ein Tiefbett aufweisenden Feige aufgebrachten Reifen, in dessen Innenraum eine zumindest zum Teil mit schalldämmenden Material gefüllte, ringförmig umlaufende Einrichtung angeordnet ist.

Der durch den Straßenverkehr verursachte Lärm zählt mit zu den störendsten Lärmquellen. Die Lärmverursacher beim Kraftfahrzeug sind Motor und Reifen, wobei auf Schnell- und Pflasterstraßen sowie bei Nässe die Reifen/Fahrbahngeräusche überwiegen. Mit der zunehmenden Zahl der schalldämmenden Motorkapselungen werden die Reifen/ Fahrbahngeräusche mehr und mehr zur dominierenden Lärmquelle.

Es ist bekannt, daß die während des Abrollens eines Reifens entstehenden Reifenschwingungen eine der Hauptursachen der Lärmabstrahlung sind. Diese Reifenschwingungen strahlen nicht nur Lärm in die Umgebung ab, in gleicher Weise wird auch Schall in den Torusraum des Reifens emmitiert. Aufgrund der besseren Impedanzverhältnisse ist die in den Reifentorus abgeschallte Schalleistung rund dreimal größer und erzeugt dort Lärmpegel bis zu 140 dB. Über die Seitenwände dringt ein Teil dieses Lärms nach außen.

Die in den Reifentorusraum eingeleiteten Schwingungen sind vom jeweiligen Anregungsmechanismus abhängig, wobei hier insbesondere die Fahrzeuggeschwindigkeit, die Struktur des Laufstreifenprofiles aber auch die Struktur der Fahrbahn eine Rolle spielen. Diese erzwungenen Schwingungen werden zusätzlich von Reifenstruktur-Schwingungen überlagert, wobei diesbezüglich insbesondere die Konstruktion und das Material des Gürtels, die Profilstruktur aber auch die Mischungszusammensetzung im Laufstreifen und in der Seitenwand sowie in den weiteren Reifenbauteilen einen Einfluß haben. Die in den Torusraum übertragenen Schwingungen besitzen bei LKW-Reifen ein Maximum im Frequenzbereich von 300 bis 1.300 Hz, bei PKW-Reifen im Frequenzbereich von 500 bis 2.000 Hz. Zusätzlich existieren Eigenschwingungen der im Torusraum befindlichen Luftsäule, deren Eigenfrequenzen von den geometrischen Abmessungen des Torusraumes abhängen. Die 1. Umfangseigenfrequenz liegt z.B. bei PKW-Reifen um 250 Hz, bei LKW-Reifen um 150 Hz, der 1. axiale Schwingungsmode liegt bei PKW-Reifen im Bereich von 500 bis 1.000 Hz, bei LKW-Reifen im Bereich von 300 bis 700 Hz. Weitere Schwingungsmoden treten bei ganzzahligen Vielfachen der Grundfrequenz auf.

Sämtliche im Torusraum von Reifen auftretenden Schalischwingungen werden zum Teil über die Seitenwände nach außen abgestrahlt oder über Kraftfahrzeugteile in den Fahrzeuginnenraum übertragen.

Es ist bekannt, daß schallabsorbierendes Material im Reifentorus die abgestrahlte Schallleistung reduziert. Eine Realisierung ist bisher daran gescheitert, daß es keine technische Lösung für eine einfache Montage und Demontage von Reifen und Dämmaterial gab.

So ist beispielsweise ein Kraftfahrzeugrad bestehend aus Feige und Reifen, in dessen Innenraum, ringförmig umlaufend, schallabsorbierende, unterschiedlich ausgeführte Einrichtungen angeordnet sind, aus der EP-A 0 029 120 bekannt. Eine der geoffenbarten Ausführungsformen besteht aus einem in einem perforierten Gehäuse, beispielsweise einem Drahtgehäuse, untergebrachten Dämpfungsmaterial, beispielsweise aus Kunststoff, Stahlwolle oder Textilien, wobei das Gehäuse etwa durch Halteringe an der Feige im Bereich zwischen den Reifenwülsten angebracht beziehungsweise befestigt werden soll. Dies bedingt eine Montage der schalldämmenden Einrichtung vor der Reifenmontage und es dürfte nicht möglich sein, nachfolgend den Reifen auf die Felge aufzuziehen.

Hier setzt nun die Erfindung ein, deren Aufgabe darin besteht, mit einer im von Felge und Reifen gebildeten Innenraum untergebrachten schalldämmenden Einrichtung eine wirkungsvolle Reduktion der sich im Torusraum ausbildenden Schallwellen unter besonderer Bedachtnahme auf einfache Montage- und Demontagemöglichkeiten zu erzielen.

Gelöst wird die gestellte Aufgabe erfindungsgemäß dadurch, daß die Einrichtung ein flexibler Schlauch ist, weicher gemeinsam mit dem Reifen montier- und demontierbar ist und in montierter Lage am Tiefbett der Felge zumindest im wesentlichen aufliegt.

Durch die erfindungsgemäße Maßnahme läßt sich eine wirkungsvolle Schalldämmung bzw. Schallabsorption im Torusraum eines Reifens realisieren. Durch entsprechende Abstimmung des Schlauches und des schalldämmenden Materials in seinem Inneren auf den jeweiligen Reifen läßt sich die Schallabstrahlung nach außen sowie die Schallübertragung ins Fahrzeuginnere merkbar reduzieren. Da der Schlauch keinen starren Körper darstellt läßt er sich zusammen mit dem Reifen problemlos montieren und auch wieder demontieren.

Weitere bevorzugte Ausgestaltungen der Erfindung sind in den Unteransprüchen enthalten.

Gemäß einer bevorzugten Ausführungsform der Erfindung kommt als Schlauch, insbesondere aufgrund seiner Elastizität, ein Gummischlauch in Frage.

Um den Rundlauf der Reifen zu gewährleisten ist es ferner von Vorteil, wenn der Schlauch so bemessen ist, daß er fest auf dem Tiefbett der Felge sitzt.

Von seiner Größe bzw. seinem Durchmesser her wird der Schlauch derart ausgeführt, daß er einen möglichst großen Teil des Volumens des Reifeninnenraumes, insbesondere bis zu einem Drittel desselben, ausfüllt und im Fahrbetrieb nicht die Reifeninnenwand berührt.

Gemäß einer bevorzugten Ausführungsform der Erfindung ist das schalldämmende Material ein loses Material, beispielsweise Schaumstoffflocken, Schaumstoffteile, Warte, Wolle, Schaumgummi oder derglieichen. Auf diese Weise bleibt der Schlauch nicht nur insgesamt flexibel sondern es können die schallabsorbierenden Eigenschaften dieses Füllmaterials voll ausgenutzt werden.

Bei einer anderen Ausführungsform der Erfindung ist das schalldämmende Material ein in sich zusammenhängendes Material, beispielsweise ein Schaumstoff.

Zur weiteren Beeinflussung der Schallabsorptionscharakteristik ist es von Vorteil, wenn das schalldämmende Material derart ausgeführt oder im Schlauch angeordnet ist, daß sich seine akustischen Eigenschaften kontinuierlich oder diskontinuierlich entlang einer seiner geometrischen Ausdehnungen ändern.

Es hat sich ferner als besonders vorteilhaft herausgestellt, wenn der Schlauch mit einer Vielzahl von Löchern versehen ist. Dadurch lassen sich die Schallabsorptionseigenschaften einerseits erhöhen und andererseits besser auf den jeweiligen Reifen abstimmen.

Diese Löcher können nun im Schlauch unregelmäßig oder regelmäßig verteilt sein, und zur weiteren Beeinflussung der Schallabsorptionseigenschaften mit unterschiedlichen Durchmessern versehen werden.

Je nach den gewünschten Schallabsorptionseigenschaften wird der Lochflächenanteil im Schlauch zwischen 5 und 80 %, insbesondere zwischen 10 und 50 %, gewählt.

Bei einer weiteren vorteilhaften Ausführungsform der Erfindung ist im Innenraum des mit Löchern versehenen Schlauches ein Ring aus schalldämmendem Material angeordnet, der gemeinsam mit dem Schlauch im Tiefbett der Felge aufliegt und dessen Außendurchmesser geringer ist als der Durchmesser des Schlauches. Durch diese Anordnung wird das Prinzip eines Loch-Plattenresonators nachgestellt, was die Absorption von Schallwellen in einem breitbandigeren Frequenzbereich deutlich verbessert.

Bei einer anderen vorteilhaften Ausführungsvariante ist der Schlauch mit einer Vielzahl von Noppen unterschiedlicher Höhe versehen. Diese Maßnahme macht es möglich, breitbandig abgestimmte Lambda/4-Resonatoren zu realisieren.

Eine weitere Variante der Erfindung besteht darin, daß der Schlauch einen in seinem Innenraum befindlichen Rohrkörper aus schalldämmenden Material, insbesondere aus Sohaumstoff, umschließt, welcher Rohrkörper am inneren Wandbereich des Schlauches anliegt. Im Inneren des Rohrkörpers befindet sich somit ein zusätzlicher Resonanz-Raum.

Bei einer weiteren Ausführungsform der Erfindung ist der mit einem in sich zusammenhängenden Dämmaterial gefüllte Schlauch mit einer Vielzahl von Löchern versehen, die sich als Hohlräume im Füllmaterial fortsetzen. Dadurch werden auf einfache Weise zusätzliche Resonatoren gebildet.

Bei einer bevorzugten Ausführung setzen sich dabei die im Schlauch mit vorzugsweise unterschiedlichen Durchmessern ausgebildeten Löcher im Füllmaterial als zylindrische Hohlräume fort.

Helmholtz-Resonatoren können dadurch gebildet werden, daß Hohlräume im Füllmaterial ausgebildet sind, die insbesondere unterschiedlich große Resonator-Hohlräume bilden, wobei die Löcher im Schlauch die Resonatorhälse bilden.

Um möglichst breitbandig wirkende Helmholtz-Resonatoren zu schaffen können diese Hohlräume im Dämmaterial kegelförmig oder kegelstumpfförmig gestaltet werden. Eine breitbandige Schallabsorption ist auch dann erzielbar, wenn im Füllmaterial Dämmkeile ausgebildet sind, wobei der Schlauch mit entsprechend angepaßten Löchern versehen ist.

Weitere Merkmale, Vorteile und Einzelheiten der Erfindung werden nun anhand der Zeichnung, die mehrere Ausführungsbeispiele in schematischer Darstellung enthält, näher beschrieben. Dabei zeigen die Fig. 1 bis 6 jeweils einen Querschnitt durch einen Reifen, der auf einer Felge aufgebracht ist, und jeweils im Schnitt verschiedene Ausführungbeispiele von schallabsorbierenden Schläuchen und Fig. 6a bis 6d Varianten der Ausführungsform gemäß Fig. 6. Fig. 7 zeigt Frequenzspektren eines LKW-Reifens, die die Wirkung von schallabsorbierenden Schläuchen veranschaulichen.

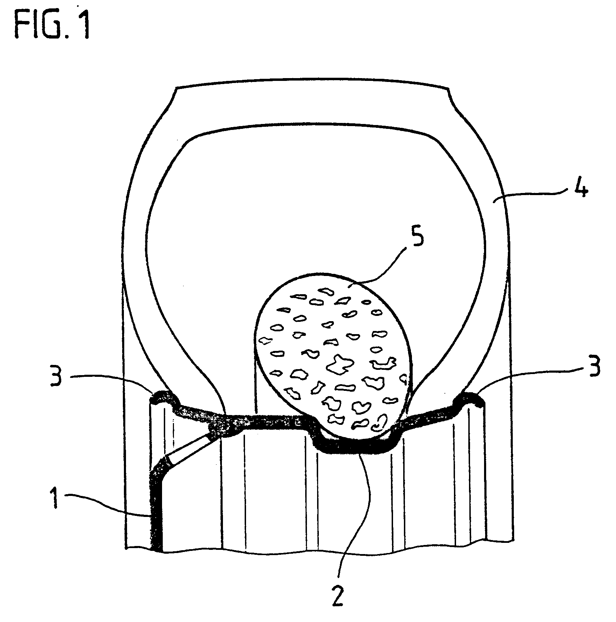

In den Fig. 1 bis Fig. 6 sind eine herkömmliche Felge 1 für einen LKW-Reifen mit einem Tiefbett 2 und Felgenhörnern 3 und schematisch ein auf dieser Felge 1 sitzender Reifen 4 im Querschnitt, dargestellt. Die vorliegende Erfindung ist jedoch nicht auf LKW-Reifen eingeschränkt, bei PKW-Reifen und PKW-Reifenfelgen ist die im folgenden beschriebene Erfindung gleichermaßen anwendbar.

Wie Fig. 1 zeigt ist über bzw. auf dem Tiefbett 2 der Felge 1 über den gesamten Umfang der Felge 1 ein Schlauch 5 angebracht. Der Schlauch 5 ist insbesondere als Gummischlauch ausgeführt, welcher ähnlich einem Fahrradschlauch oder einem Reifeninnenschlauch gestaltet ist und insbesondere bezüglich Wanddicke, Flächengewicht und Elastizität einem solchen Fahrrad- oder Reifeninnenschlauch entsprechen kann. Der Schlauch 5 ist mit einem schalldämmenden Material gefüllt, wobei als Füllmaterial beispielsweise Schaumstoffflocken, Schaumstoffteile, Watte, Wolle etc. in Frage kommen. Die Wahl des Füllmaterials ist auf die erwünschten Schallabsorptionseigenschaften abzustimmen, die vom jeweiligen Reifen abhängen, um eine Schallabsorption für den jeweils in Betracht gezogenen Frequenzbereich sicherzustellen.

Der Schlauch 5 wird zwar vollständig gefüllt, jedoch nur soweit, daß er insgesamt deformierbar bleibt, um zur Montage und Demontage über das Felgenhorn gezogen werden zu können. Die Abmessungen des Schlauches sowie seine Elastizität sollen so bemessen sein, daß einerseits eine Montage problemlos möglich ist und andererseits nach Beendigung der Montage ein festes Aufliegen im Tiefbett 2 der Felge 1 gewährleistet ist. Dabei sind auch das Füllmaterial und der Schlauch 5 so aufeinander abgestimmt, daß durch die Fliehkraft während des Abrollens des Reifens der Schlauch 5 seinen Sitz auf der Felge 1 behält. Von seiner Größe bzw. seinem Durchmesser her wird der Schlauch 5 derart gestaltet, daß er einen möglichst großen Teil, insbesondere bis zu einem Drittel des Volumens des Reifeninnenraumes ausfüllt und nicht mit der Innenwand des belasteten Reifens in Kontakt tritt.. Dies gilt, ebenso wie die schon beschriebenen Angaben über Material und sonstige Eigenschaften des Schlauches 5 für sämtliche Ausführungsbeispiele.

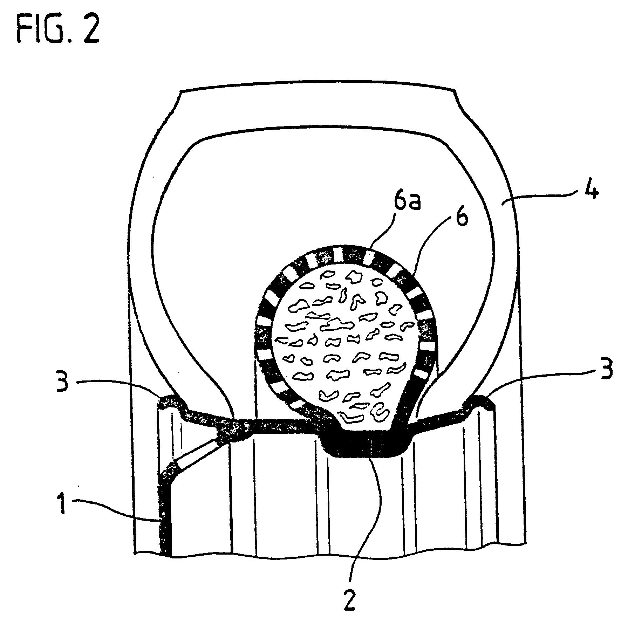

In Fig. 2 ist eine weitere Ausführungsvariante dargestellt, bei der der Schlauch 6, der wie der Schlauch 5 im Ausführungsbeispiel gemäß Fig. 1 mit entsprechendem Dämmaterial gefüllt ist, mit einer Vielzahl von die Schlauchwand komplett durchdringenden Löchern 6a versehen. Die Löcher 6a haben bevorzugt einen kreisförmigen Querschnitt, können jedoch mit beliebigem Querschnitt versehen werden, der Durchmesser der Löcher wird zwischen 2 und 20 mm gewählt, ihre Verteilung am Schlauch 6 kann gleichmäßig oder ungleichmäßig, insbesondere quer zur Umfangsrichtung veränderlich, erfolgen. Der Lochflächenanteil an der Gesamtoberfläche des Schlauches 6 ist sowohl vom Schlauchmaterial als auch vom Füllmaterial abhängig und wird im allgemeinen zwischen 5 und 80 %, insbesondere 10 bis 50 %, betragen. Durchmesser, Verteilung und Lochflächenanteil sowie die Schallabsorptionseigenschaften des Füllmaterials werden auf den jeweiligen Reifen abgestimmt, um die Schallabsorption im jeweils wichtigen Frequenzbereich zu optimieren.

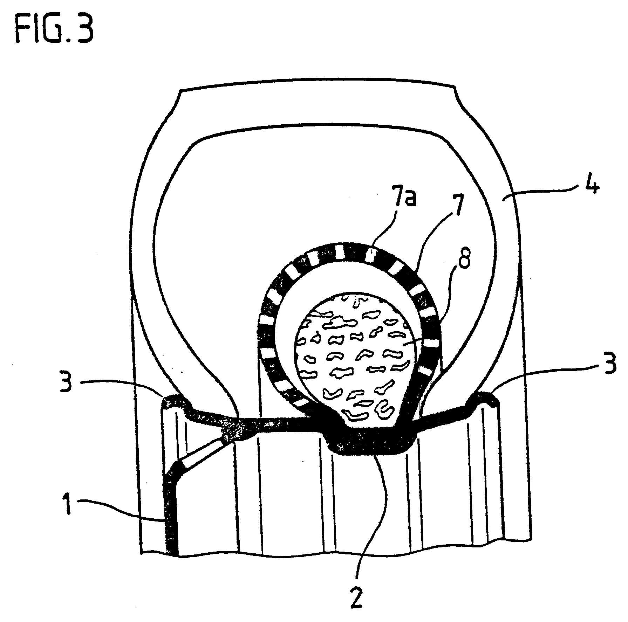

Fig. 3 zeigt eine Ausführungsvariante, bei der ein mit Löchern 7a versehener Schlauch 7, ähnlich oder analog zu jenem gemäß Fig. 2, vorgesehen ist, in dessen Innenraum sich ein Schaumgummiring 8 befindet, der vom Innendurchmesser so bemessen ist, daß er gemeinsam mit dem Schlauch 7 im Tiefbett 2 der Felge 1 aufliegt. Der Außendurchmesser des Ringes 8 ist geringer als der Durchmesser des Schlauches 7, so daß zwischen dem Ring 8 und dem Schlauch 7 ein Hohlraum verbleibt. Dabei kann durch entsprechende Querschnittgestaltung des Ringes 8 ein Hohlraum geschaffen werden, dessen Abstand zur Innenwand des Schlauches 7 quer zur Umfangsrichtung variiert. Durch die Fliehkraft während des Abrollens des Reifens füllt sich dieser Hohlraum mit Luft, so daß sich der gewählte Abstand einstellt. Durch diese Anordnung wird das Prinzip eines Loch-Plattenresonators nachgestellt, was die Absorption von Schallwellen in einem breitbandigeren Frequenzbereich erhöht.

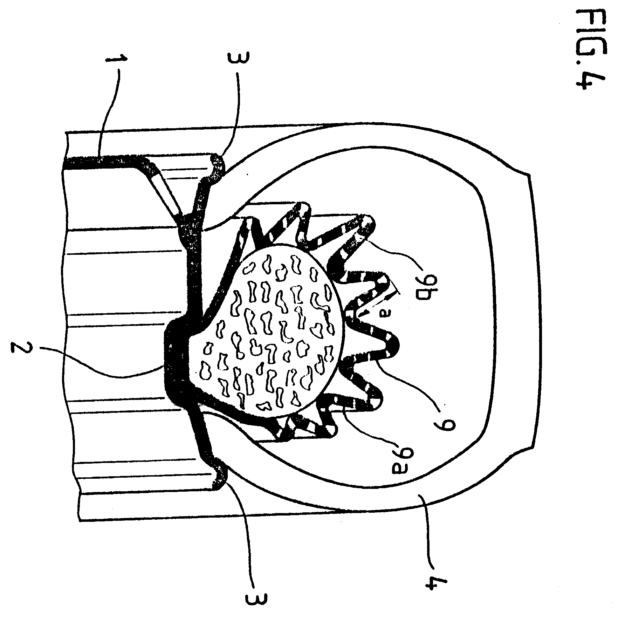

Der in Fig. 4 dargestellte Schlauch 9, der ebenfalls mit Dämmaterial wie oben beschrieben gefüllt ist, ist mit einer Vielzahl von Noppen 9a versehen. Die Noppen 9a haben unterschiedliche Höhen a, die so bemessen sind, daß auf diese Weise breitbandig abgestimmte Lambda/4-Resonatoren realisiert werden. So ist beispielsweise für eine Absorption einer Schallwelle mit 1000 Hz eine Noppenhöhe a von 7,5 cm erforderlich. Die Noppen 9a können zur weiteren Verbesserung der Schallabsorption zusätzlich mit Löchern 9b versehen werden.

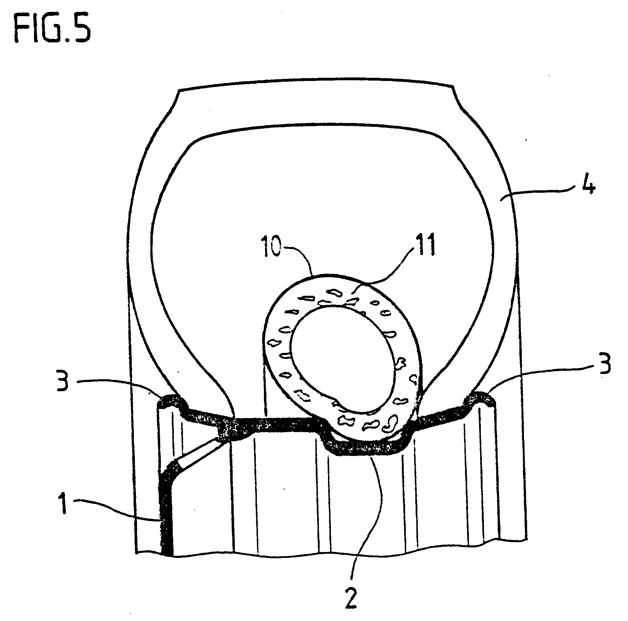

Bei dem in Fig. 5 dargestellten Ausführungsbeispiel umschließt der Schlauch 10 einen innen hohlen Rohrkörper 11 aus schalldämmendem Material, beispielsweise aus Schaumstoff. Der Rohrkörper 11 liegt am inneren Wandbereich des Schlauches 10 an, kann mit der Innenwand des Schlauches 10 beispielsweise durch Kleben fest verbunden sein, im Inneren des Rohrkörpers 11 befindet sich somit ein zusätzlicher Resonanzraum.

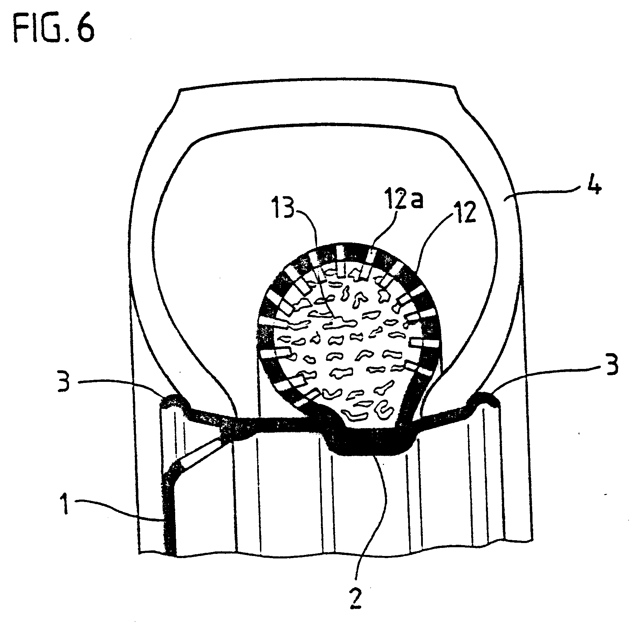

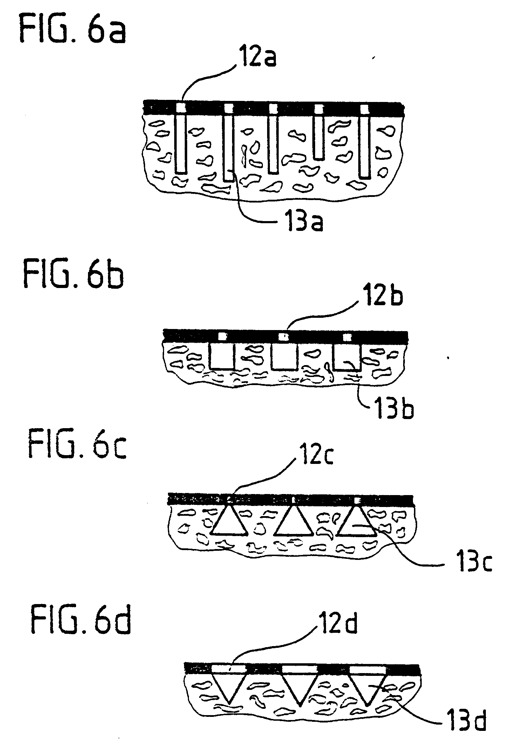

Bei dem in Fig. 6 dargestellten Ausführungsbeispiel ist ein Schlauch 12 vorgesehen, welcher mit einem in sich zusammenhängenden, entsprechend ausgeformten Dämmaterial 13 zur Gänze gefüllt ist. Dazu kann der Schlauch 12 ausgeschäumt sein. Der Schlauch 12 ist wiederum mit einer Vielzahl von Löchern 12a versehen, die sich als Hohlräume ebenso im Dämmaterial 13 fortsetzen, so daß verschiedene Arten von Resonatoren gebildet werden. Mögliche unterschiedliche Ausführungsvarianten zeigen die Figuren 6a bis 6b.

Fig. 6a zeigt eine Ausführung mit Lochresonatoren. Die im Schlauch 12 mit vorzugsweise verschiedenen Durchmessern ausgebildeten Löcher 12a setzen sich im Dämmaterial 13 als unterschiedlich große zylindrische Hohlräume 13a fort.

In Fig. 6b ist eine Ausführung unter der Bildung von Helmholtz-Resonatoren dargestellt. Die Löcher 12b im Schlauch 12 bilden die Resonatorhälse, die Hohlräume 13b im Dämmaterial die Resonatorhohlräume. Auch hier sind die Hohlräume 13b und/oder die Löcher 12b unterschiedlich dimensioniert.

Fig. 6c zeigt eine Ausführungsvariante mit breitbandig wirkenden Helmholtz-Resonatoren. Dabei sind wie in der Ausführungsform nach Fig. 6b im Schlauch 12 Löcher 12c ausgebildet, die die Resonatorhälse darstellen, im Dämmaterial sind Hohlräume 13c ausgebildet, die kegelstumpfförmig gestaltet sind.

Fig. 6d zeigt schließlich eine Ausführungsvariante wo durch das Nachbilden von Dämmkeilen Lambda/4 Resonatoren verwirklicht werden. Die Dämmkeile 13d sind im Dämmaterial ausgeformt, der Schlauch 12 besitzt angepaßte breite Öffnungen 12d.

Bei den Ausführungsvarianten gemäß Fig. 6a bis Fig. 6d werden die Abmessungen der Löcher im Schlauch, der Resonatorhohlräume im Dämmaterial bzw. der Dämmkeile der erwünschten Schallabsorption angepaßt. Dabei ist es selbstverständlich, daß einerseits diese Abmessungen bei einem einzelnen Schlauch unterschiedlich gewählt werden können, als auch die dargestellten und beschriebenen Ausführungsvarianten miteinander bei ein und demselben Schlauch kombiniert werden können.

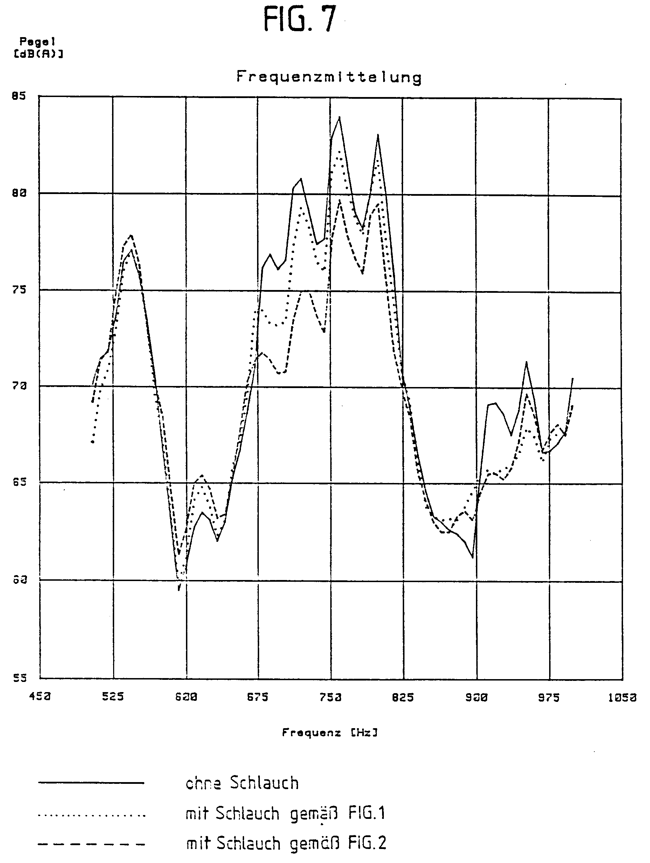

Fig. 7 zeigt Frequenzspektren eines LKW-Reifens, die im Nahfeld des auf einem Trommelprüfstand laufenden Reifens ermittelt werden. Dabei wurde je ein Frequenzspektrum für einen Reifen ohne erfindungsgemäßen Schlauch, einen Reifen mit einem Schlauch in der Ausführung nach Fig. 1 und mit einem Schlauch in der Ausführung nach Fig. 2 ermittelt. Es ist deutlich zu sehen, daß bei den beiden erfindungsgemäßen Ausführungen eine deutliche Reduzierung des Schalldruckpegels erfolgt.

Generell gilt, daß die anhand der einzelnen Zeichnungsfiguren beschriebenen unterschiedlichen Varianten miteinander in beliebiger Art und Weise kombiniert werden können. Ebenfalls gilt generell, daß sich die akustischen Eigenschaften der verwendeten Materialien kontinuierlich oder diskontinuierlich längs ihrer geometrischen Ausdehnung ändern können.

Schalldämmendes Material in loser Form, also beispielsweise Schaumstoffteile, Schaumstoffflocken und dergleichen, können durch eine Öffnung im Schlauch eingebracht werden, die nach dem Füllen, beispielsweise durch Verkleben wieder geschlossen wird.

Bei ringförmig gestaltetem schalldämmendem Material ist es möglich, den über seinen Umfang geöffneten Schlauch über dieses Material zu stülpen und wieder, beispielsweise durch Verkleben, zu verschließen.

## Patentansprüche

1. Kraftfahrzeugrad mit einem auf einer ein Tiefbett aufweisenden Feige aufgebrachten Reifen, in dessen Innenraum eine zumindest zum Teil mit schalldämmenden Material gefüllte, ringförmig umlaufende Einrichtung angeordnet ist, dadurch gekennzeichnet, daß die Einrichtung ein flexibler Schlauch (5, 6, 7, 9, 10, 12) ist, welcher gemeinsam mit dem Reifen (4) montier- und demontierbar ist und in montierter Lage am Tiefbett (2) der Felge zumindest im wesentlichen aufliegt.

2. Kraftfahrzeugrad nach Anspruch 1, dadurch gekennzeichnet, daß der Schlauch (5, 6, 7, 9, 10, 12) ein Gummischlauch ist.

3. Kraftfahrzeugrad nach Anspruch 1 oder 2, dadurch gekennzeichnet, daß der Schlauch (5, 6, 7, 9, 10, 12) einen möglichst großen Teil, insbesondere bis zu einem Drittel, des Volumens des Reifeninnenraumes ausfüllt und im Fahrbetrieb die Reifeninnenwand nicht berührt.

4. Kraftfahrzeugrad nach einem der Ansprüche 1 bis 3, dadurch gekennzeichnet, daß das schalldämmende Material ein loses Material, beispielsweise Schaumstoffflocken, Schaumstoffteile, Watte, Wolle, Schaumgummi oder dergleichen ist.

5. Kraftfahrzeugrad nach einem der Ansprüche 1 bis 3, dadurch gekennzeichnet, daß das schalldämmende Material ein in sich zusammenhängendes Material, beispielsweise ein Schaumstoff, ist.

6. Kraftfahrzeugrad nach einem der Ansprüche 1 bis 5, dadurch gekennzeichnet, daß das schalldämmende Material derart ausgeführt oder im Schlauch (5, 6, 7, 9, 10, 12) angeordnet ist, daß sich seine akustischen Eigenschaften kontinuierlich oder diskontinuierlich entlang einer seiner geometrischen Ausdehnungen ändern.

7. Kraftfahrzeugrad nach einem der Ansprüche 1 bis 5, dadurch gekennzeichnet, daß der Schlauch (6, 7, 9, 10, 12) mit einer Vielzahl von Löchern (6a, 7a, 9b, 12a, 12b, 12c, 12d) versehen ist.

8. Kraftfahrzeugrad nach Anspruch 7, dadurch gekennzeichnet, daß die Löcher (6a, 7a, 9b, 12a, 12b, 12c, 12d) im Schlauch (6, 7, 9, 10, 12) regelmäßig oder unregelmäßig verteilt sind.

9. Kraftfahrzeugrad nach Anspruch 7 oder 8, dadurch gekennzeichnet, daß die Löcher (6a, 7a, 9b, 12a, 12b, 12c, 12d) verschiedene Durchmesser aufweisen.

10. Kraftfahrzeugrad nach einem der Ansprüche 7 bis 9, dadurch gekennzeichnet, daß der Schlauch (6, 7, 9, 10, 12) einen Lochflächenanteil von 5 bis 80 %, insbesondere von 10 bis 50 %, aufweist.

11. Kraftfahrzeugrad nach einem der Ansprüche 1 bis 10, dadurch gekennzeichnet, daß im Innenraum des mit Löchern (7a) versehenen Schlauches (7) ein Ring (8) aus schalldämmendem Material, beispielsweise aus Schaumgummi, angeordnet ist, der gemeinsam mit dem Schlauch (7) im Tiefbett der Feige (1) aufliegt und dessen Außendurchmesser geringer ist als der Durchmesser des Schlauches (7).

12. Kraftfahrzeugrad nach einem der Ansprüche 1 bis 11, dadurch gekennzeichnet, daß der Schlauch (9) mit einer Vielzahl von Noppen (9a) unterschiedlicher Höhen versehen ist.

13. Kraftfahrzeugrad nach einem der Ansprüche 1 bis 12, dadurch gekennzeichnet, daß der Schlauch (10) einen in seinem Innenraum befindlichen Rohrkörper (11) aus schalldämmendem Material, insbesondere aus Schaumstoff, umschließt, welcher Rohrkörper (11) am inneren Wandbereich des Schlauches (10) anliegt.

14. Kraftfahrzeugrad nach einem der Ansprüche 1 bis 13, dadurch gekennzeichnet, daß der mit einem in sich zusammenhängendem Material gefüllte Schlauch (12) mit einer Vielzahl von Löchern (12a, 12b, 12c, 12d) versehen ist, die sich als Hohlräume im Füllmaterial fortsetzen.

15. Kraftfahrzeugrad nach Anspruch 14, dadurch gekennzeichnet, daß sich die im Schlauch (12) mit vorzugsweise unterschiedlichen Durchmessern ausgebildeten Löcher (12a) im Füllmaterial als zylindrische Hohlräume (13) fortsetzen.

16. Kraftfahrzeugrad nach Anspruch 14, dadurch gekennzeichnet, daß die Hohlräume im Füllmaterial insbesondere unterschiedlich große Resonator-Hohlräume (13) bilden, wobei die Löcher (12b) im Schlauch (12) die Resonatorhälse bilden.

17. Kraftfahrzeugrad nach Anspruch 14 oder 16, dadurch gekennzeichnet, daß die Hohlräume (13c) im Füllmaterial kegelförmig oder kegelstumpfförmig gestaltet sind.

18. Kraftfahrzeugrad nach Anspruch 14, dadurch gekennzeichnet, daß im Füllmaterial Dämmkeile (13d) ausgebildet sind, wobei der Schlauch (12) mit entsprechend angepaßten Löchern (12d) versehen ist.

## Claims

1. Automotive vehicle wheel, having a tyre mounted on a rim provided with a drop base, an annularly circulatory arrangement being disposed in the interior of said tyre and being filled at least partially with sound-reducing material, characterised in that the arrangement is a flexible tube (5, 6, 7, 9, 10, 12) which, together with the tyre (4), is mountable and dismountable and at least substantially rests on the drop base (2) of the rim in the mounted position.

2. Automotive vehicle wheel according to claim 1, characterised in that the tube (5, 6, 7, 9, 10, 12) is a rubber tube.

3. Automotive vehicle wheel according to claim 1 or 2, characterised in that the tube (5, 6, 7, 9, 10, 12) fills as large a part as possible, more especially up to one-third, of the volume of the tyre interior and does not touch the internal tyre wall during travel.

4. Automotive vehicle wheel according to one of claims 1 to 3, characterised in that the sound-reducing material is a loose material, for example expanded plastic foam rolls, expanded plastic foam pieces, cotton wool, wool, expanded rubber or the like.

5. Automotive vehicle wheel according to one of claims 1 to 3, characterised in that the sound-reducing material is a coherent material, for example an expanded plastic foam.

6. Automotive vehicle wheel according to one of claims 1 to 5, characterised in that the sound-reducing material is configured in such a manner, or is disposed in the tube (5, 6, 7, 9, 10, 12) in such a manner, that its acoustic properties continuously or discontinuously change along one of its geometrical dimensions.

7. Automotive vehicle wheel according to one of claims 1 to 5, characterised in that the tube (6, 7, 9, 10, 12) is provided with a plurality of holes (6a, 7a, 9b, 12a, 12b, 12c, 12d).

8. Automotive vehicle wheel according to claim 7, characterised in that the holes (6a, 7a, 9b, 12a, 12b, 12c, 12d) in the tube (6, 7, 9, 10, 12) are distributed regularly or irregularly.

9. Automotive vehicle wheel according to claim 7 or 8, characterised in that the holes (6a, 7a, 9b, 12a, 12b, 12c, 12d) have different diameters.

10. Automotive vehicle wheel according to one of claims 7 to 9, characterised in that the tube (6, 7, 9, 10, 12) has a proportion of perforated areas of between 5 % and 80 %, more especially between 10 % and 50 %.

11. Automotive vehicle wheel according to one of claims 1 to 10, characterised in that a ring (8), formed from sound-reducing material, for example formed from expanded rubber, is disposed in the interior of the tube (7), which is provided with holes (7a), said ring resting in the drop base of the rim (1), together with the tube (7), and the external diameter of said ring being smaller than the diameter of the tube (7).

12. Automotive vehicle wheel according to one of claims 1 to 11, characterised in that the tube (9) is provided with a plurality of knubs (9a) of variable heights.

13. Automotive vehicle wheel according to one of claims 1 to 12, characterised in that the tube (10) surrounds a tubular body (11), which is situated in its interior and is formed from sound-reducing material, more especially expanded plastic foam, which tubular body (11) abuts against the internal wall region of the tube (10).

14. Automotive vehicle wheel according to one of claims 1 to 13, characterised in that the tube (12), which is filled with a coherent material, is provided with a plurality of holes (12a, 12b, 12c, 12d), which continue as cavities in the filling material.

15. Automotive vehicle wheel according to claim 14, characterised in that the holes (12a), which are provided in the tube (12) with diameters which are preferably variable, continue in the filling material as cylindrical cavities (13).

16. Automotive vehicle wheel according to claim 14, characterised in that the cavities in the filling material form, more especially, resonator cavities (13) of variable sizes, the holes (12b) in the tube (12) forming the resonator necks.

17. Automotive vehicle wheel according to claim 14 or 16, characterised in that the cavities (13c) in the filling material have a conical or frustoconical configuration.

18. Automotive vehicle wheel according to claim 14, characterised in that insulating wedges (13d) are provided in the filling material, the tube (12) being provided with correspondingly adapted holes (12d).

## Revendications

1. Roue de véhicule automobile avec pneu introduit sur une jante présentant une base creuse, dans l'espace interne de laquelle est apporté un dispositif de forme annulaire au moins en partie rempli de matériau isolant sonore, caractérisée en ce que le dispositif est un tuyau flexible (5, 6, 7, 9, 10, 12), qui est montable et démontable en même temps que le pneu (4) et disposé au moins pour l'essentiel en position montée sur la base creuse (2) de la jante.

2. Roue de véhicule automobile selon la revendication 1, caractérisée en ce que le tuyau (5, 6, 7, 9, 10, 12) est un tuyau de caoutchouc.

3. Roue de véhicule automobile selon la revendication 1 ou 2, caractérisée en ce que le tuyau (5, 6, 7, 9, 10, 12) remplit une proportion aussi grande que possible, en particulier jusqu'à un tiers du volume de l'espace interne du pneu et n'entre pas en contact lorsqu'il roule avec la paroi interne du pneu.

4. Roue de véhicule automobile selon l'une des revendications 1 à 3, caractérisée en ce que le matériau isolant sonore est un matériau lâche, par exemple des flocons de matière en mousse, des morceaux de matière en mousse, de la ouate, de la laine, du caouthcouc-mousse, ou analogue.

5. Roue de véhicule automobile selon l'une des revendications 1 à 3, caractérisée en ce que le matériau isolant sonore est un matériau en soit cohérent, par exemple un matériau en mousse.

6. Roue de véhicule automobile selon la revendication 1 à 6, caractérisée en ce que le matériau isolant sonore est réalisé ou disposé dans le tuyau (5, 6, 7, 9, 10, 12) de manière que ses propriétés acoustiques se modifient de façon continue ou discontinue le long d'une de ses dimensions géométriques.

7. Roue de véhicule automobile selon la revendication 1 à 5, caractérisée en ce que le tuyau (5, 6, 7, 9, 10, 12) est muni d'un grand nombre de trous (6a, 7a, 9b, 12a, 12b, 12c, 12d).

8. Roue de véhicule automobile selon la revendication 7, caractérisée en ce que les trous (6a, 7a, 9b, 12a, 12b, 12c, 12d) sont répartis dans le tuyau (6, 7, 9, 10, 12) de façon régulière ou irrégulière.

9. Roue de véhicule automobile selon la revendication 7 ou 8, caractérisée en ce que les trous (6a, 7a, 9b, 12a, 12b, 12c, 12d) présentent des diamètres différents.

10. Roue de véhicule automobile selon l'une des revendications 7 à 9, caractérisée en ce que le tuyau (6, 7, 9, 10, 12) présente une proportion surfacique de trous de 5 à 80%, en particulier de 10 à 50%.

11. Roue de véhicule automobile selon l'une des revendications 1 à 10, caractérisée en ce que dans l'intérieur du tuyau 7 muni de trous 7a est disposé un anneau 8 en matériau isolant sonore, par exemple en caoutchouc-mousse, qui courrent en même temps que le tuyau 7 dans la base creuse de la jante 1 et dont le diamètre externe est plus faible que le diamètre du tuyau 7.

12. Roue de véhicule automobile selon l'une des revendications 1 à 11, caractérisée en ce que le tuyau 9 est muni d'un grand nombre de tétons 9a de hauteurs différentes.

13. Roue de de véhicule automobile selon l'une des revendications 1 à 12, caractérisée en ce que le tuyau 10 comprend un corps tubulaire 11 se trouvant dans son espace interne et constitué de matériau isolant sonore, en particulier d'un matériau en mousse, ce corps tubulaire 11 étant situé dans la zone de la paroi interne du tuyau 10.

14. Roue de de véhicule automobile selon l'une des revendications 1 à 13, caractérisée en ce que le tuyau 12 rempli d'un matériau en soi cohérent est muni d'un grand nombre de trous (12a, 12b, 12c, 12d) qui se poursuivent sous forme de cavités dans le matériau de remplissage.

15. Roue de de véhicule automobile selon la revendication 14, caractérisée en ce que les trous formés dans le tuyau 12 avec des diamètres de préférence différents se poursuivent dans le matériau de remplissage sous forme de cavité cylindriques.

16. Roue de de véhicule automobile selon la revendication 14, caractérisée en ce que les cavités dans le matériau de remplissage forment en particulier des cavités de résonateurs (13) de tailles différentes, les trous 12b formant dans le tuyau (12) les gorges de résonateur.

17. Roue de véhicule automobile selon la revendication 14 ou 16, caractérisée en ce que les cavités (13c) dans le matériau de remplissage sont en forme de cône ou de tronc de cône.

18. Roue de véhicule automobile selon la revendication 14, caractérisée en ce que dans le matériau de remplissage sont formés des coins d'amortissement (13d), le tuyau (12) étant muni de trous (12d) adaptés correspondants.
